# EUROPEAN PATENT APPLICATION

(11) **EP 4 624 990 A1**
(43) Date of publication of application: **01.10.2025**
(21) Application number: 25165517.1
(22) Date of filing: 24.03.2025
(51) Int. Cl.: G01S 13/06, G01S 13/50, H04W 72/0453, H04W 72/044, H04W 72/53, G01S 7/35

(54) **RADIO SENSING CONTROL**

(30) Priority: 25.03.2024 FI 20245336
(71) Applicant: Nokia Solutions and Networks Oy, 02610 Espoo (FI)
(72) Inventor: SZCZERBAN GONZALEZ, Mijail, Murray Hill (US); WILD, Thorsten, Stuttgart (DE); HU, Yue Amanda, Epping (AU)
(74) Representative: Nokia EPO representatives

(57) **Abstract**

Disclosed is a method comprising determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

## Description

### TECHNICAL FIELD

The following example embodiments relate to radio sensing.

### BACKGROUND

Radio sensing is a technology that uses radio waves to detect and measure the characteristics of objects, environments, or phenomena.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising at least one processor, and at least one memory storing instructions that, when executed by the at least one processor, cause the apparatus at least to: determine at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtain sensing configuration information associated with at least one of: the one or more prohibited sensing spaces, or the one or more enhanced sensing spaces; and control, based on the sensing configuration information, at least one of: the radio sensing in the one or more prohibited sensing spaces, or the enhanced radio sensing in the one or more enhanced sensing spaces.

According to a second aspect, there is provided a method comprising: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

According to a third aspect, there is provided a computer program comprising instructions which, when executed by an apparatus, cause the apparatus to perform at least the following: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

According to a fourth aspect, there is provided a computer readable medium comprising program instructions which, when executed by an apparatus, cause the apparatus to perform at least the following: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

According to a fifth aspect, there is provided a non-transitory computer readable medium comprising program instructions which, when executed by an apparatus, cause the apparatus to perform at least the following: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

According to a sixth aspect, there is provided an apparatus comprising circuitry configured to perform at least: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

According to a seventh aspect, there is provided an apparatus comprising: means for determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; means for obtaining sensing configuration information associated with at least one of: the one or more prohibited sensing spaces, or the one or more enhanced sensing spaces; and means for controlling, based on the sensing configuration information, at least one of: the radio sensing in the one or more prohibited sensing spaces, or the enhanced radio sensing in the one or more enhanced sensing spaces.

According to an eighth aspect, there is provided the apparatus of the seventh aspect, wherein the sensing configuration information comprises at least one of the following configuration parameters for one or more antennas: a transmit power level associated with the one or more prohibited sensing spaces, a transmit power level associated with the one or more enhanced sensing spaces, a transmit power level associated with the one or more non-enhanced sensing spaces, an angle of arrival associated with the one or more prohibited sensing spaces, an angle of arrival associated with the one or more enhanced sensing spaces, an angle of arrival associated with the one or more non-enhanced sensing spaces, an angle of departure associated with the one or more prohibited sensing spaces, an angle of departure associated with the one or more enhanced sensing spaces, an angle of departure associated with the one or more non-enhanced sensing spaces, a beamwidth associated with the one or more prohibited sensing spaces, a beamwidth associated with the one or more enhanced sensing spaces, a beamwidth associated with the one or more non-enhanced sensing spaces, an angular range associated with the one or more prohibited sensing spaces, an angular range associated with the one or more enhanced sensing spaces, an angular range associated with the one or more non-enhanced sensing spaces, a carrier frequency associated with the one or more prohibited sensing spaces, a carrier frequency associated with the one or more enhanced sensing spaces, a carrier frequency associated with the one or more non-enhanced sensing spaces, a bandwidth associated with the one or more prohibited sensing spaces, a bandwidth associated with the one or more enhanced sensing spaces, a bandwidth associated with the one or more non-enhanced sensing spaces, a phase to be applied per antenna element of the one or more antennas in relation to the one or more prohibited sensing spaces, a phase to be applied per antenna element of the one or more antennas in relation to the one or more enhanced sensing spaces, a phase to be applied per antenna element of the one or more antennas in relation to the one or more non-enhanced sensing spaces, an amplitude to be applied per antenna element of the one or more antennas in relation to the one or more prohibited sensing spaces, an amplitude to be applied per antenna element of the one or more antennas in relation to the one or more enhanced sensing spaces, or an amplitude to be applied per antenna element of the one or more antennas in relation to the one or more non-enhanced sensing spaces.

According to a ninth aspect, there is provided the apparatus of the seventh or eighth aspect, wherein the means for the controlling are configured to perform at least one of: control a radio head to prevent transmission of one or more sensing radio signals from one or more antennas of the radio head towards the one or more prohibited sensing spaces, or control the radio head to prevent reception of one or more reflected sensing radio signals by one or more antennas of the radio head from the one or more prohibited sensing spaces.

According to a tenth aspect, there is provided the apparatus of any of the seventh to ninth aspects, further comprising: means for obtaining a configuration of a radio head configured to perform the radio sensing; means for comparing the configuration of the radio head and the sensing configuration information; and means for determining, based on the comparison, whether the radio head is configured to perform the radio sensing in the one or more prohibited sensing spaces, wherein the means for the controlling are configured to at least remove sensing information obtained by the radio head from the one or more prohibited sensing spaces, based on determining that the radio head is configured to perform the radio sensing in the one or more prohibited sensing spaces.

According to an eleventh aspect, there is provided the apparatus of the tenth aspect, further comprising: means for creating a periodogram by applying a fast Fourier transform operation or a discrete Fourier transform operation to a channel frequency response from the one or more prohibited sensing spaces, wherein the removing comprises at least altering a response of the periodogram for a set of values associated with the one or more prohibited sensing spaces.

According to a twelfth aspect, there is provided the apparatus of the eleventh aspect, wherein the removing further comprises: processing the channel frequency response with a low-pass smoothing filter for smoothing edges of the one or more prohibited sensing spaces; and performing an inverse fast Fourier transform operation or an inverse discrete Fourier transform operation to the channel frequency response after processing the channel frequency response with the low-pass smoothing filter.

According to a thirteenth aspect, there is provided the apparatus of the any of the tenth to twelfth aspects, wherein the sensing information comprises at least a list of detected targets, the list comprising one or more targets detected in the one or more prohibited sensing spaces, wherein the removing comprises at least removing, from the list of detected targets, the one or more targets detected in the one or more prohibited sensing spaces.

According to a fourteenth aspect, there is provided the apparatus of any of the seventh to thirteenth aspects, wherein the enhanced radio sensing comprises at least one of: an enhanced velocity resolution, an enhanced angular resolution, an enhanced range resolution, or an enhanced detection probability compared to the one or more non-enhanced sensing spaces in which the radio sensing is allowed.

According to a fifteenth aspect, there is provided the apparatus of any of the seventh to fourteenth aspects, further comprising: means for creating a spatial map indicating the one or more prohibited sensing spaces, the one or more enhanced sensing spaces, and the one or more non-enhanced sensing spaces; and means for controlling, based on the spatial map and the sensing configuration information, the radio sensing in the one or more prohibited sensing spaces, the enhanced radio sensing in the one or more enhanced sensing spaces, and the radio sensing in the one or more non-enhanced sensing spaces.

According to a sixteenth aspect, there is provided the apparatus of any of the seventh to fifteenth aspects, further comprising means for receiving, from at least one user equipment, information indicating at least one of: the one or more prohibited sensing spaces, the one or more enhanced sensing spaces, or the one or more non-enhanced sensing spaces.

According to a seventeenth aspect, there is provided the apparatus of the sixteenth, wherein the information indicating the one or more prohibited sensing spaces comprises at least a location of the at least one user equipment, and a diameter around the at least one user equipment within which the radio sensing is not allowed.

According to an eighteenth aspect, there is provided the apparatus of any of the seventh to seventeenth aspects, further comprising: means for communicating with one or more wireless communication devices in the one or more prohibited sensing spaces.

According to a nineteenth aspect, there is provided the apparatus of the first aspect or any of the seventh to seventeenth aspects, wherein the apparatus comprises, or is comprised in, a network function of a core network.

According to a twentieth aspect, there is provided the apparatus of the first aspect or any of the seventh to eighteenth aspects, wherein the apparatus comprises, or is comprised in, a central unit of a radio access network node, or a distributed unit of the radio access network node, or a radio unit of the radio access network node.

According to a twenty-first aspect, there is provided the apparatus of the first aspect or any of the seventh to eighteenth aspects, wherein the apparatus comprises, or is comprised in, a radio head, wherein at least a subset of antennas of the radio head are configured to enable the radio sensing.

According to a twenty-second aspect, there is provided the apparatus of the first aspect or any of the seventh to eighteenth aspects, wherein the apparatus comprises, or is comprised in, a user equipment.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2A illustrates an example embodiment;
FIG. 2B illustrates an example embodiment;
FIG. 2C illustrates an example embodiment;
FIG. 2D illustrates an example embodiment;
FIG. 3A illustrates an example of sensing spaces;
FIG. 3B illustrates an example of sensing spaces;
FIG. 4 illustrates an example of an integrated sensing and communication system;
FIG. 5 illustrates an example of a transmit and receive chain of a periodogram-based orthogonal frequency-division multiplexing radar system;
FIG. 6 illustrates a flow chart;
FIG. 7 illustrates a flow chart;
FIG. 8 illustrates a flow chart;
FIG. 9 illustrates a flow chart;
FIG. 10 illustrates a flow chart; and
FIG. 11 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

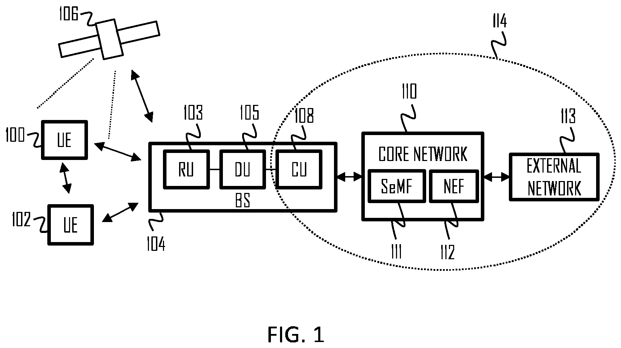

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with a base station (BS) 104 of a radio access network.

The base station 104 may comprise a computing device configured to control the radio resources of the base station 104 and to be in a wireless connection with one or more UEs 100, 102. The base station 104 may also be referred to as a base transceiver station (BTS), an access point, an access node, a cell site, a network node, a radio access network node, or a RAN node. In this description, the terms "radio access network node" and "base station" may be used interchangeably.

The base station 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The base station 104 may include or be coupled to transceivers. From the transceivers of the base station 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the base station 104 may be called uplink (UL) or reverse link, and the wireless connection (e.g., radio link) from the base station 104 to the UE 100, 102 may be called downlink (DL) or forward link. A UE 100 may also communicate directly with another UE 102, and vice versa, via a wireless connection generally referred to as a sidelink (SL). It should be appreciated that the base station 104 or its functionalities may be implemented by using any node, host, server, access point or other entity suitable for providing such functionalities.

The radio access network may comprise more than one base station 104, in which case the base stations may also be configured to communicate with one another over wired or wireless links. These links between base stations may be used for sending and receiving control plane signaling and also for routing data from one base station to another base station.

The base station 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), a session management function (SMF), a sensing management function (SeMF) 111, and/or a network exposure function (NEF) 112.

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and base station operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the base station 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, base stations and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, a base station 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the base station 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for a base station 104. The CU 108 may comprise a control plane (CU-CP), which may be a logical node hosting the RRC and the control plane part of the PDCP protocol of the NR protocol stack for the base station 104. The CU 108 may further comprise a user plane (CU-UP), which may be a logical node hosting the user plane part of the PDCP protocol and the SDAP protocol of the CU for the base station 104.

The DU 105 may be a logical node hosting radio link control (RLC), medium access control (MAC) and/or physical (PHY) layers of the NR protocol stack for the base station 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean base station operations to be carried out, at least partly, in a computing system operationally coupled to a remote radio head (RRH) or a radio unit (RU) 103 of a base station 104. It is also possible that base station operations may be performed on a distributed computing system or a cloud computing system located at the base station 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the base station 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the base station 104 depicted in FIG. 1 is just an example of a part of a radio access network, and in practice the radio access network may comprise a plurality of base stations 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of base station that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The base station(s) 104 of FIG. 1 may provide any kind of these cells. A cellular radio network may be implemented as a multilayer access networks including several kinds of radio cells. In multilayer access networks, one base station may provide one kind of a radio cell or radio cells, and thus a plurality of base stations may be needed to provide such a multilayer access network.

For fulfilling the need for improving performance of radio access networks, the concept of "plug-and-play" access nodes may be introduced. A radio access network, which may be able to use "plug-and-play" base stations, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

For enabling integrated sensing and communication (ISAC), the time-frequency multiplexing feature of orthogonal frequency-division multiplexing (OFDM) based communication provides a possibility to carry data as well as a sensing reference signal over the same medium at the same time. Thus, the OFDM waveform used for communication may also be used for radar-like processing, referred to as radio sensing herein.

Radio sensing enables the real-time digital representation of the physical environment, as well as detecting objects in the surrounding of RAN base stations 104. Radio sensing may be used to track network devices (e.g., UEs 100, 102) as well as passive or non-network devices (e.g., persons, objects, etc.). This may enable various applications such as, but not limited to: detecting the speed of a vehicle, transport optimization, transit accident avoidance, immersive gaming, real-time healthcare monitoring (e.g., detecting the heartbeat of a human), etc.

However, some radio sensing applications may also raise concerns about privacy for network operators, end-users and sensitive industries. If not controlled, radio sensing can reach sensitive infrastructure, private property, residential areas, and any imaginable space surrounding RAN base stations 104. Some governments or agencies may also regulate the reach of radio sensing in certain environments or jurisdictions. Thus, it is desirable to create solutions that allow to control where, when, and how radio sensing is performed.

Some example embodiments are described below using principles and terminology of 5G and 6G radio access technology without limiting the example embodiments to 5G and 6G radio access technology, however.

Some example embodiments provide a system and a method for controlling radio sensing by limiting in an adaptable and configurable way the spaces where radio sensing can be applied, while preventing any effect to communication applications (e.g., in an ISAC system). In other words, some example embodiments enable creating independent and configurable radio sensing spaces, where radio sensing mechanisms may be controlled, disabled, or enhanced in specific dimensions as per user configuration.

Radio sensing control elements may be integrated into the radio head, or upstream hardware or processing components, and thus the radio sensing control may take place at different levels. For example, at the hardware level, it is possible to limit where sensing radio signals are emitted to or from which directions returned radio signals are being captured. As another example, at the sensing processing level, it is possible to exclude or remove some sensing information captured in some regions or exclude a region from the results transmitted to external elements.

To this end, one or more sensing spaces (regions) and sensing configuration information related to a given sensing space may be defined. This may include the creation of a database that associates the sensing configuration information with a targeted sensing space. For example, certain beamwidths and angles of emission may enhance detection in some sensing space, while other configurations may obscure the same sensing space.

The sensing configuration information may comprise, for example, a radio sensing space transceiver configuration database that comprises the hardware configuration details associated with a given sensing space, and the radio sensing technique or type of radio sensing to be applied to this sensing space. This database associating the radio configuration with a targeted sensing space and sensing type to be applied describes the sensing spaces. The hardware configuration details may include the parameters associated to the configuration of an antenna or a set of antennas, such as at least one of: transmit power (Tx power), angle of arrival (AoA), angle of departure (AoD) influenced by antenna or beam pattern, beamwidth, angular range, carrier frequency, or bandwidth.

Radio signals have different characteristics that can be modified to control their reach and to exclude certain spaces from their range. One way of achieving this control is by adapting the transmission power for reducing or increasing the reach of the radio signal. Another way is to adjust the frequency of emission, which affects the reach of the sensing radio signal and the depth of penetration into different materials. Controlling the angle of emission can also determine the spaces that will be reachable by the radio signal. However, it should be noted that any other parameter and controllable characteristic of the radio sensing signal system that can be adjusted to define the spatial reach of the signal can alternatively be used.

The radio configuration details that lead to the sensing of any defined sensing space may be stored in the radio sensing space transceiver configuration database. This database may store the relation between the radio sensing configuration information and sensing spaces. The radio sensing space transceiver configuration database may have a record listing one or more prohibited sensing spaces and/or one or more enhanced sensing spaces and the associated configuration parameters. The radio hardware used for sensing should support the detection of the current state of the parameters described in the radio sensing space transceiver configuration database, so that sensing activities can be effectively controlled.

Some examples of the radio sensing space transceiver configuration database are shown in Tables 1 and 2 below. However, it should be noted that some example embodiments are not limited to the values shown in Tables 1 and 2.

**Table 1.**

| Sensing space type | Beamwidth | Vertical angular range | Horizontal angular range | Tx power (min) | Tx power (max) |
|---|---|---|---|---|---|
| Prohibited | A | 10° - 12.5° | 5° - 6.3° | 30 W | 76 W |
| Enhanced A | B | 8° - 20° | 10° - 12° | 25 W | 80 W |
| Enhanced B | C | 32° - 38° | 20°- 32° | 60 W | 75 W |
| ... | ... | ... | ... | ... | ... |

**Table 2.**

| Sensing space type | Dipole 1 [Phase/Amplit ude] | Dipole 2 [Phase/Amplit ude] | Dipole 3 [Phase/Amplit ude] | ... | Dipole N [Phase/Amplit ude] |
|---|---|---|---|---|---|
| Prohibit ed | 12.5° /22 | 14° / 13 | 14° /12 | ... | 42° / 24 |
| Enhanc ed A | 20° / 18 | 16° /23 | 12° /32 | ... | 0°/ 40 |
| Enhanc ed B | 38°/12 | 38°/12 | 37°/13 | ... | 25°/21 |
| ... | ... | ... | ... | ... | ... |

Herein the enhanced sensing may comprise at least one of: a) enhanced velocity resolution and/or maximum velocity area: an area where more dense observations and/or longer observation bursts in time are needed; b) enhanced detection probability: create a higher processing gain by using as much OFDM resource elements in time and frequency as possible for the sensing observation; c) enhanced range resolution: the maximum possible system bandwidth has to be used; and/or d) enhanced angular resolution: a higher number of angular sampling points.

There may be as many sensing spaces with specific constraints and sensing capabilities as required according to the specific implementation. Specific enhanced sensing spaces can be defined according to the specific needs of these spaces. For instance, on a highway, an enhanced velocity resolution may be applied, while in an immersive gaming infrastructure, an enhanced angular resolution may be applied.

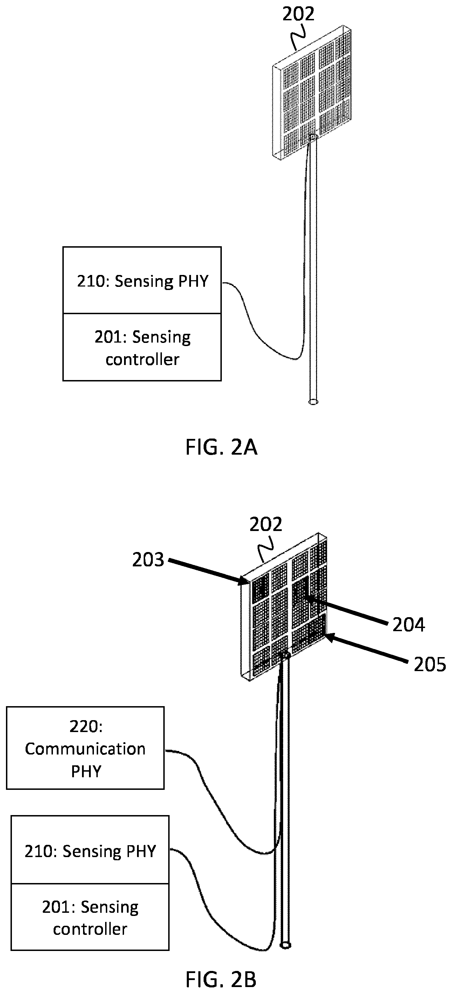

FIG. 2A illustrates an example embodiment, wherein a radio sensing controller 201 has direct control of an independent sensing radio head 202 in order to enforce the conditions dictated by the radio sensing space transceiver configuration database. In this case, the radio head 202 and all necessary systems to enable radio sensing may be implemented separately from communication networks.

The radio sensing controller 201 comprising the radio sensing space transceiver configuration database may be integrated into the hardware controlling the radio head 202, for example on a system-on-chip (SoC), an application-specific integrated circuit (ASIC), a field-programmable gate array (FPGA), or a central processing unit (CPU). Alternatively, the sensing controller 201 may be implemented as software instead of hardware. The example embodiment shown in FIG. 2A enables physical control of the reach of the sensing radio signal, so that the antenna of the radio head 202 is never configured such that the sensing radio signal can effectively retrieve information from a prohibited sensing space. For instance, the radio sensing controller 201 may prevent radio sensing from happening in one or more prohibited sensing spaces by defining the angles of emission, transmit power and frequency of emitted radio signals accordingly. The radio sensing controller 201 may also detect the angle of reflection to estimate the region of origin of the radio signal.

The radio control hardware includes the radio sensing controller 201 (processing or decision-making unit) and all the elements required to establish effective and real-time communication with the components that control the physical configuration of the antenna and, in some embodiments, can also include the antenna or parts of the antenna.

The sensing PHY 210 refers to the physical (PHY) layer aspects of the radio sensing system. In such systems, the physical layer is responsible for the actual transmission and reception of sensing radio signals over a medium, which may include electromagnetic waves for radar. The sensing PHY layer 210 may handle the specifics of how these sensing signals are generated, transmitted, received, and processed to extract meaningful information from the physical environment. This may include the design of the signal waveforms, modulation schemes, antenna technologies, and signal processing techniques tailored to optimize the sensing capabilities and accuracy of the system.

Massive multiple-input and multiple-output (MIMO) radio systems may be equipped with large antenna arrays that can steer and shape the radio signal as a directional beam to adapt it to the specific requirements. For instance, if a single UE is communicating with the radio head 202, the radio head 202 can direct the radio beam towards the direction of that UE to enhance transmission performance and/or reduce power consumption. Having MIMO antennas enhances the ability to establish independent radio links for different UEs, enhancing the transmission performance and reducing signal interference. Moreover, massive MIMO may be leveraged to implement hardware-level network slicing, dedicating some elements of the antenna array for specific applications.

FIG. 2B illustrates an example embodiment, wherein the communication and sensing systems may be operated in parallel in the same radio head 202. For instance, in MIMO systems, a subset of antenna elements 203, 204, 205 of the antenna array may be dedicated for sensing activities, while the other antenna elements of the antenna array may be dedicated for communication activities. In this case, the sensing antenna elements 203, 204, 205 may be part of the radio sensing control hardware, and they can be directly and independently controlled by the sensing controller 201 according to specific sensing requirements defined in the radio sensing space transceiver configuration database, such as the regions of pulse emission, intensity of the signal, and frequency of the signal. In other words, the database stores configurations that are authorized to be used by sensing functions, and it prevents the subset of sensing antenna elements 203, 204, 205 from reaching prohibited sensing spaces by controlling their steering angle (horizontal and vertical), power/gain, frequency, and any other characteristic that can limit the reach of certain spatial regions. If the database is implemented directly in the radio hardware, it can prevent the physical sensing of prohibited sensing spaces rather than letting other layers to process the obtained information and filter out the sensing information from the prohibited sensing spaces. The antenna elements that are used for communication services (not for sensing) are not affected by the same constraints, and the communication radio signals are able to reach all the reachable spaces (including the prohibited sensing spaces that are not accessible by the sensing radio signals).

The communication PHY 220 refers to the physical layer (PHY) in the context of communication systems. The physical layer is the lowest layer in the Open Systems Interconnection (OSI) model and is responsible for the transmission and reception of raw data bits over a physical medium. It defines the electrical, mechanical, procedural, and functional specifications required for activating, maintaining, and deactivating physical connections for bit transmission between devices. This includes aspects such as modulation, line coding, bit synchronization, data rates, transmission mediums (e.g., copper, fiber, wireless), and the physical connectors and interfaces that devices use to connect to a network.

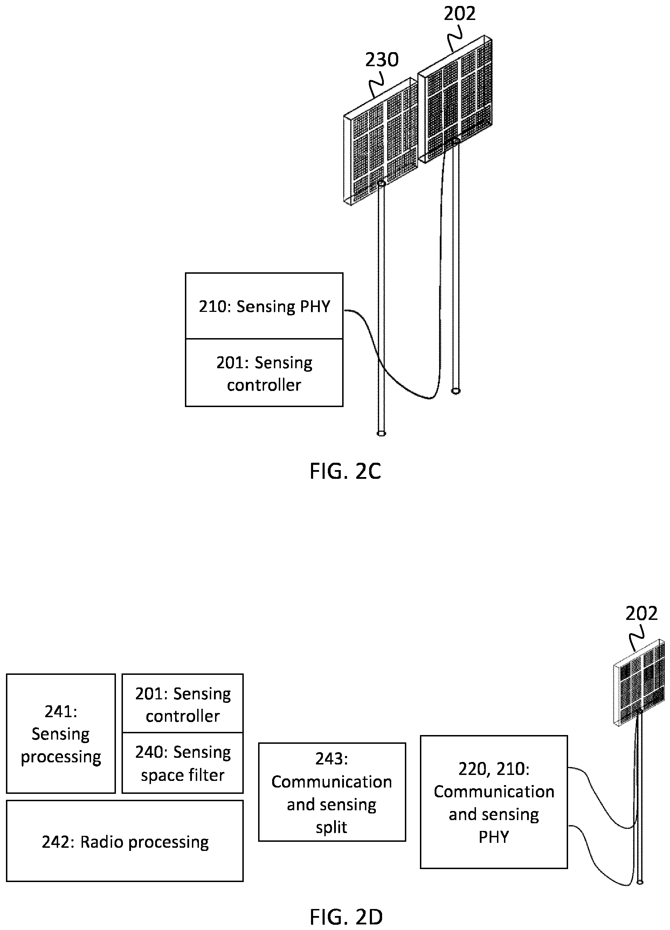

FIG. 2C illustrates an example embodiment, wherein separate radio heads 202, 230 may be used for sensing and communication, respectively. In this case, the sensing control based on the radio sensing space transceiver configuration database may be applied only to the sensing radio head 202, while the communication radio head 230 may operate normally (i.e., not limited by the sensing rules). The sensing radio head 202 may be adapted to the frequency ranges, power levels and angular resolution needed for sensing. The sensing radio head 202 can also be installed independently in sites where communication radio heads 230 are not required.

In some implementations, the same physical antenna element may emit the sensing and communication radio signals, and time-division multiplexing, frequency-division multiplexing or code-division multiplexing can be used to share resources between different applications (e.g., communication and sensing). In this case, the time slot, frequency range or any other resource that is used for a sensing application may be constrained by the sensing controller 201, so that the sensing signals comply with the conditions dictated in the radio sensing space transceiver configuration database. Thus, the sensing radio signal emitted during the timeslot allocated to the sensing application is adapted to the sensing space that it is targeting. For instance, if the antenna element has an angle of emission directed at a prohibited sensing space during the time slot, then the signal will not be emitted (or retrieved) during this time slot.

Network infrastructure communication and sensing hard slicing may occur, when the sensing controller 201 has direct control over the hardware that is used for sensing both at the transmission and reception sides.

FIG. 2D illustrates an example embodiment, wherein the sensing controller 201 comprising the database does not have direct control over the radio head 202 (e.g., when the radio head 202 is also a communication radio head in normal operation used also for sensing). However, in this case, the sensing controller 201 has access to the current (real-time) configuration of the radio head 202, so that the sensing controller 201 can compare the current configuration with the radio sensing space transceiver configuration database, and determine the sensing space(s) being targeted by the radio head 202. The radio sensing controller 201 may then handle the incoming sensing information accordingly. For instance, if the sensing controller 201 detects that the current configuration of the radio head 202 targets a prohibited sensing space, the sensing controller 201 can directly discard the sensing information associated with the prohibited sensing space, so that it is not processed further. The sensing controller 201 may be implemented directly in the radio head 202, or remotely from the radio head 202.

The sensing space filter 240 refers to the component that does the effective treatment of the sensing radio signal, such as eliminating sensing information from the incoming information associated with a prohibited sensing space, or adjusting the scope of the received sensing information to highlight an enhanced sensing space. The sensing controller 201 controls the sensing space filter 240 and possibly other subcomponents as well. The sensing controller 201 implements the sensing rules (policies) that are configured locally or remotely by the sensing control plane.

The communication and sensing split 243 is an element that acts as a demarcation point: on the right side of the element 243, communication and sensing coexist in the same hardware, while after the element 243 (on the left side), the communication and sensing applications are separated. In this example, the antenna and PHY is shared for sensing and communication applications. From this application split 243, the information (signal, configuration, etc.) corresponding to sensing and the ones associated to communication services are separated.

The sensing processing 241 refers to the analysis and interpretation of radio frequency (RF) signals to extract information about the environment or objects within it. Radio sensing involves using RF signals to detect, locate, and characterize objects or phenomena.

The radio processing 242 refers to the series of techniques and operations applied to RF signals to transmit and receive information effectively. It encompasses a wide range of tasks such as signal generation, modulation, amplification, filtering, demodulation, and decoding. The goal of the radio processing 242 is to ensure that information carried by RF signals can be transmitted over distances with minimal loss of fidelity, efficiently use the available spectrum, and mitigate interference from other sources. This may involve both analog and digital processing techniques to adapt the signals for the physical transmission medium, optimize bandwidth usage, and ensure the integrity and security of the transmitted data.

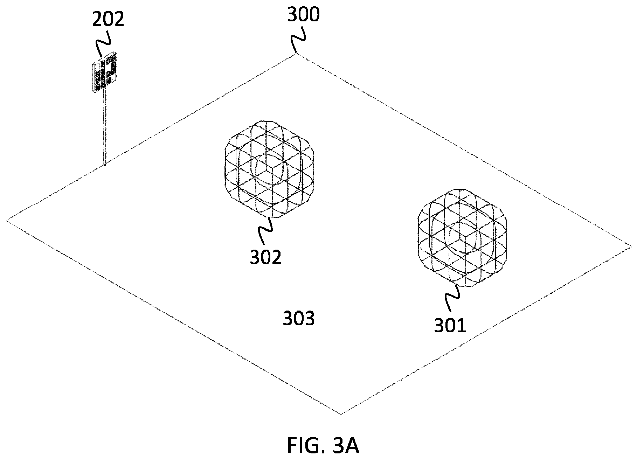

FIG. 3A illustrates an example of a three-dimensional map 300 of sensing spaces 301, 302, 303, where the radio head 202 is in the top-left side of the representation. In order to enforce the sensing rules, the sensing spaces 301, 302, 303 where sensing can or cannot be applied should be identified. Herein a sensing space may be defined as a three-dimensional physical space where radio sensing activity can be controlled. The sensing may be enabled, disabled, or adjusted (e.g., in terms of precision, periodicity, etc.) independently for a given sensing space. A spatial map 300 may be created, where the sensing spaces 301, 302, 303 are identified and classified.

In the example of FIG. 3A, there are three sensing spaces: a prohibited sensing space 301 (where radio sensing is disabled or not allowed), an enhanced sensing space 302, and a normal (non-enhanced) sensing space 303. The normal (non-enhanced) sensing space 303 comprises the rest of the space reachable by the sensing radio signal that is not included in the prohibited sensing space 301 and the enhanced sensing space 302. The normal sensing space 303 provides normal (i.e., non-enhanced) sensing capacity. The sensing capacity may be determined by the parameters that can be controlled and observed by the radio sensing system.

The details needed to identify a given sensing space are such that the sensing activities can be limited to the space where sensing is enabled and with the specifications required for each sensing space. These details may include, but are not limited to, the phase and amplitude applied to each element of the antenna array, the angle of emission (or reception) of the antenna, beam shape, angular resolution, the distance to the object, the time delay of the reflected signal, the power level of the received signal, and any physical signature of the reflected signal that identifies the spatial location of any given device or object.

The sensing rules can also eventually be reset from enhanced or prohibited to a neutral state (i.e., the prohibited sensing space 301 or the enhanced sensing space 302 may be switched to a normal non-enhanced sensing space).

Various techniques may be used to create the map 300 of the sensing spaces 301, 302, 303 to be used for controlling the radio sensing. For example, a three-dimensional mapping application may be used to create a representation of the environment surrounding the radio system. The user (e.g., network operator or end-user) can define, in the three-dimensional representation, which spaces can be sensed and what type of sensing (e.g., normal or enhanced) should be executed for a given space. In this case, the sensing configuration information associated with the sensing spaces may be pre-defined in the radio sensing space transceiver configuration database. In other words, the sensing configuration information for each sensing space may be known in advance. In this case, there is no need for UE positioning as the sensing region definition can be requested in the application layer, for instance by selecting the coordinates defining the limits of the volume of the sensing region to be configured.

As another example, the sensing controller 201 may use one or more automatic classification algorithms or systems to identify the type of sensing space in the environment that is being sensed and prevent sensing if the region is not enabled for radio sensing. For instance, one or more artificial intelligence or machine learning algorithms may be configured to differentiate sensing spaces spanning public streets and forests, and differentiate them from residential and office buildings.

As another example, in a 6G or 5G cellular radio access sensing system, when the cellular radio access network infrastructure is commissioned, the network operator may define the spaces where radio sensing is enabled (e.g., by using a three-dimensional mapping of the environment). For example, in an urban environment, the spaces where radio sensing is enabled may include the public infrastructure (e.g., roads and sidewalks), while excluding any spaces within private property.

As another example, a dedicated or general-purpose UE 100, 102 or other radio equipment may be used to mark or identify the boundaries of the sensing spaces 301, 302. For example, a UE connected to the radio access network may be placed in regions where sensing is enabled (or disabled), so that the radio sensing control system can create the map 300 of the sensing spaces. The radio sensing system may implement a UE location technique to identify the sensing spaces by correlating the location information of the UE and the radio head configuration with the sensing space classification defined by the user of the UE. For example, in a domestic environment, the user can use their UE to define the sensing spaces. In such an example, the UE may comprise an application that the user can use to identify each room of the house and walk around each corner of the room, so that the radio system can detect any type of radio signature as well as the configuration of the radio head, and associate the room with a sensing space (classified by the user) and apply the specific sensing rules defined in the database. For example, the UE (or other radio equipment) may send a signal to the sensing controller 301 to indicate that the region where the UE (or other radio equipment) is located needs to be assigned a given sensing control criteria (e.g., sensing prohibited or enhanced sensing), and this sensing configuration may be stored at the sensing controller 301 following the sensing control criteria that is established.

The UE 100, 102 may also provide additional input for prohibiting sensing. For example, a new signaling may be standardized for the UE 100, 102 to indicate the need of a privacy region around the UE 100, 102 with a certain diameter. This signaling can be sent via the regular data communication RAN link from the UE 100, 102 to the base station 104. The base station 104 (or the sensing controller 201 within the base station 104) may then take this into account as a temporary space where sensing is prohibited.

This can also be done in a similar manner for the enhanced sensing feature. A UE (e.g., part of an autonomous driving car) may mark its surrounding or the area in front of it or the next crossing as area with enhanced sensing needs, indicated by signaling via RAN, which the base station 104 can then take into account in its sensing requirements.

For example, the sensing controller 301 may use the RAN positioning service to locate the UE based on at least one of: an uplink angle of arrival (UL-AoA) of an uplink signal transmitted from the UE, observed time difference of arrival with idle period in the downlink (OTDOA-IPDL), round trip time (RTT), uplink time difference of arrival (UL-TDOA), downlink time difference of arrival (DL-TDOA), downlink angle of departure (DL-AoD), or carrier phase. This information may be shared with the sensing controller 301, which may also detect through the sensing control plane (e.g., from the application layer) that the user or operator's technician has defined a sensing space policy using the UE. The sensing controller 301 may correlate positioning information from the RAN system with the sensing space policy request of the user and populate the radio sensing space transceiver configuration database.

If there is a dedicated sensing radio head or sensing-dedicated antenna elements in the antenna array, the sensing controller 301 may have direct control of emission and/or reception of the sensing radio signal. In this case, the sensing controller 301 may track the UE that is being used to configure the sensing space and directly correlate the current sensing configuration information of the transceiver with the position of the UE. The user or operator's technician may start a sensing space definition protocol where they assign a sensing space type (e.g., prohibited, enhanced, or non-enhanced) by starting an application in the UE. This application may send a signaling message to the radio head 202 (reaching the sensing controller 301) indicating the sensing type, radius of applicability, time duration, and any other relevant configuration detail to populate the radio sensing space transceiver configuration database.

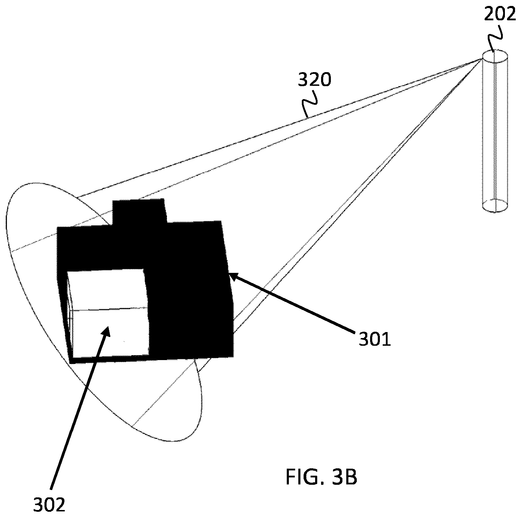

FIG. 3B illustrates an example of indoor sensing space identification. In FIG. 3B, the cone 320 represents the radio signal emitted by the radio head 202 (or radio sensing system) directed into the representation of a house. Inside the house, some rooms (e.g., the bedroom and the bathroom) have been defined as a prohibited sensing space 301 represented by the black color, while another room (e.g., the living room) has been defined as an enhanced sensing space 302. The space outside the house may be associated with normal (i.e., non-enhanced) sensing capacity.

In a home environment, users can install wireless access points that have built-in sensing capabilities. The end-user may configure the sensing spaces, where radio sensing is enabled, and the time of day when the sensing is enabled. The end-user may enable or disable the sensing capabilities completely or partially. The end-user may define each of the sensing spaces by walking in the space (e.g., living room) and reaching all the corners of the room at different altitudes. The sensing controller 201 located in the radio access unit or in a remote location then detects the location details and stores them in the database to identify the sensing space, and controls the sensing activities therein (e.g., activate, deactivate, manage precision, etc.).

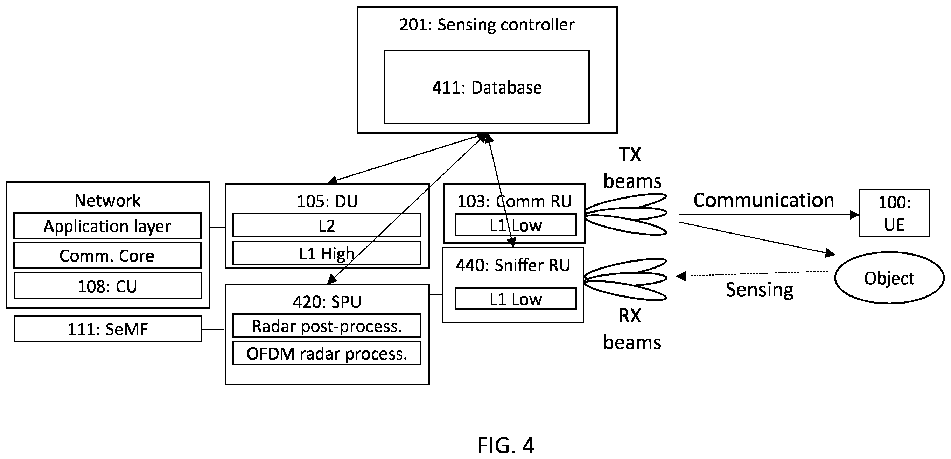

FIG. 4 illustrates an example of an integrated sensing and communication (ISAC) system, to which some example embodiments may be applied. A shared communication and sensing antenna of the ISAC system may be realized on cellular network radio access hardware.

ISAC makes very efficient use of spectrum as, due to its integrated nature, the same bands with the same carriers can be used for both communication and sensing purposes, and the multiplexing capabilities of cellular systems (e. g., due to OFDM waveforms) can efficiently trade-off service qualities both for communications as well as the sensing service qualities. The spectrum choice dominates the system capabilities. 5G capacity layers are in the so-called frequency range 1 (FR1) bands below 5 GHz and use bandwidths up to 100 MHz. Frequency range 2 (FR2) in the millimeter frequency ranges starting at around 24 GHz offer bandwidths up to 800 MHz and are more attractive for sensing due to the higher range resolution. For 6G, the main capacity layer, the "Golden Band", is expected to be in the range of 6-14 GHz and may offer up to 400 MHz of bandwidth, making it attractive for wide-area sensing.

Sensing in cellular systems can be achieved by different architectures. If the sensing processing resides in the base station 104, the system has lighter signaling overhead and less demands concerning UE complexity and battery consumption. FIG. 4 displays a simplified end-to-end system overview with the base station split architecture with radio unit (RU) 103, distributed unit (DU) 105 and central unit (CU) 108.

The end-to-end network architecture of 5G systems may be expanded by one or more network functionalities dedicated to sensing, denoted as a sensing management function (SeMF) 111. The SeMF 111 may be comprised in the core network 110. The SeMF 111 may be responsible for aggregating sensing information from base stations and UEs, and providing high-level resource allocation management to cells involved in sensing operations based on sensing quality of service (QoS).

In FIG. 4, the main radio unit 103 is used primarily for communication services, and a secondary radio unit receiver 440, called the "sniffer" (dedicated for sensing), is added to capture the reflected radio signal. In this description, the terms "radio unit", "radio head" and "remote radio head" may be used interchangeably. For example, the secondary radio unit receiver (sniffer) 440 may correspond to the radio head 202 of FIG. 2C.

A server called the sensing processing unit (SPU) 420 may run real-time OFDM radar processing software. In FIG. 4, the SPU 420 is shown as a dedicated entity, but it may alternatively be co-located in the RU 103, DU 105 or CU 108 and share its processing resources.

The system may use the enhanced common public radio interface (eCPRI) over optical fiber for communication between the RU 103 and DU 105, as well as between the sniffer RU 440 and the SPU 420. The sniffer RU 440 may be directly controlled by the SPU 420, which switches beams and requests the radio resources to be received over the control-plane, and receives in-phase and quadrature-phase (IQ) data of the reflected signal via the user-plane. Both RUs 103, 440 may be connected via fiber to a common synchronization source (5G system module), synchronizing both RUs 103, 440 via the precision time protocol (PTP) and synchronous ethernet (SyncE).

The sensing controller 201 may comprise the radio sensing space transceiver configuration database 411, where each sensing space has been identified in advance as a normal (non-enhanced, non-prohibited) sensing space, an enhanced sensing space, or a prohibited sensing space. The specific configuration parameters of the radio that allow to enhance or limit the sensing in the corresponding space are also stored in the database 411.

For example, the database 411 may be populated such that a user or technician places a UE in different positions of each of the sensing spaces, while the sensing controller 201 captures the radio signatures coming from the UE, which allows for the identification of the specific space.

In one embodiment, the sensing controller 201 may be an independent (separate) entity and it may not have complete control over the configuration of the main radio unit 103, since its primary use is for communications. In this case, the sensing controller 201 cannot prevent prohibited sensing spaces from being targeted by the radio signal.

In another embodiment, the sensing controller 201 (sensing control hardware or software) may be integrated into the SPU 420 and, in this case, the sensing controller 201 may also comprise the sensing receiving radio head (sniffer) 440 that is directly controlled by the sensing controller 201. The sensing controller 201 may communicate with the DU 105 (e.g., 5G-A or 6G DU) to enhance the signal quality to improve the sensing capabilities in the enhanced sensing spaces, or request to suppress the sensing signal in the prohibited sensing spaces. If communication needs to be established with a UE 100 located in a prohibited sensing space, the DU 105 may serve the communication service normally, but the sensing controller 201 may be informed in real-time about this configuration, so that the sensing controller 201 can make a sensing control decision. For instance, the sensing controller 201 may discard all incoming sensing information from the sniffer, if the sensing information is obtained from a prohibited sensing space (hardware-level protection for highly sensitive environments).

Alternatively, or additionally, the sensing controller 201 may enforce the removal of the sensing information obtained from the prohibited sensing space after the SPU 420 has processed all the incoming information. By doing so, the sensing controller 201 can reduce the impact of the prohibited sensing space on the overall performance of the radio sensing mechanism, while limiting the extraction of information from the prohibited sensing space. This can provide hardware-based protection, if the sensing controller 201 is implemented in the same hardware entity (e.g., SoC or FPGA or ASIC in combination with one or more general-purpose CPUs) as the SPU 420 and has control over the image extraction process.

The processing chain of the SPU 420 may comprise the following stages: 1) reference and reflected signal reception, 2) channel computation, 3) clutter removal, 4) range/doppler periodogram computation, 5) peak extraction and interpolation, and 6) target tracking.

In the reference and reflected signal reception stage, eCPRI packets from the main RU 103 and the sniffer RU 440 are received and preprocessed. Each radio frame may be an N × M matrix, where N is the number of subcarriers (SC) in each symbol, and M is the number of symbols in the radio frame.

In the channel computation stage, resource-element-wise division of the reflected signal by the reference signal is performed.

In the clutter removal stage, to isolate targets, it is desirable to remove signal contributions resulting from reflections from objects not of interest for the sensing task. The channel of the reference scenario may be recorded during system calibration and subtracted from the reflected signal at runtime.

In the range/doppler periodogram computation stage, N fast Fourier transform (FFT) operations are performed on the channel, followed by M inverse fast Fourier transform (IFFT) operations on the result. The squared magnitude of each element of the result of the FFT and IFFT operations may be computed, resulting in a two-dimensional periodogram, containing Doppler and range information for the processed radio frame.

In the peak extraction and interpolation stage, elements in the periodogram that exceed a configurable threshold are potential targets. The remaining elements may form clusters in the range and Doppler domain, caused by the same object. The local maxima of these clusters may be extracted and used to construct the list of detected targets (e.g., sorted by element value, which corresponds to received power).

In the target tracking stage, detected targets may optionally be tracked, for example by means of a Kalman filter (KF).

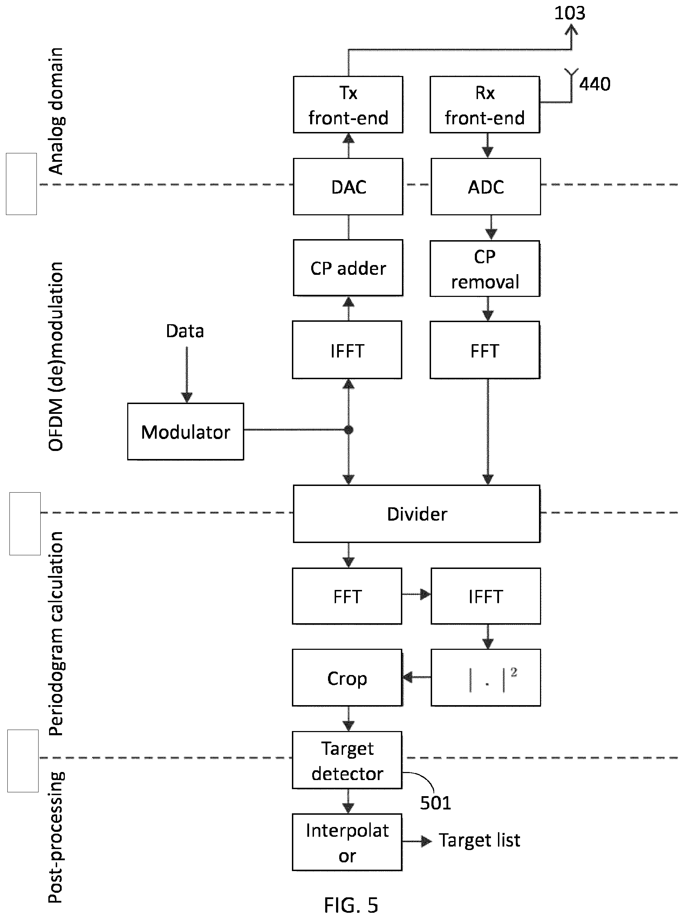

FIG. 5 illustrates an example of a transmit (Tx) and receive (Rx) chain of a periodogram-based OFDM radar system (e.g., the system of FIG. 4). In FIG. 5, DAC is an abbreviation for digital-to-analog converter, ADC is an abbreviation for analog-to-digital converter, CP is an abbreviation for cyclic prefix, IFFT is an abbreviation for inverse fast Fourier transform, and FFT is an abbreviation for fast Fourier transform. In order to extract the positions of target objects from the periodogram, the periodogram-based OFDM radar system may comprise a target detector 501. The target detector 501 may be used to identify peaks in the periodogram originating from valid target objects, distinguishing them from peaks originating from other sources, such as additive white Gaussian noise (AWGN) or ambiguities caused by the side lobes of the target objects.

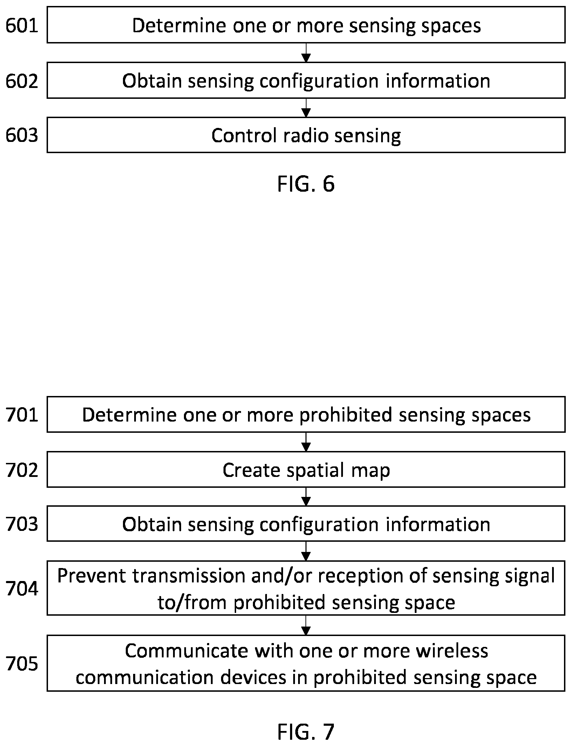

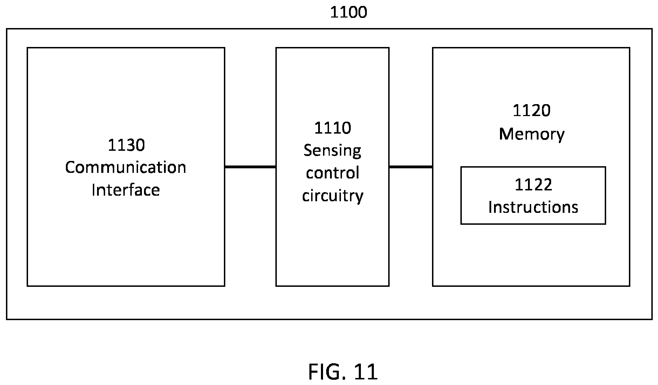

FIG. 6 illustrates a flow chart according to an example embodiment of a method for radio sensing control. The method may be performed by an apparatus 1100 depicted in FIG. 11. The apparatus 1100 may refer to the sensing controller 201.

Referring to FIG. 6, in block 601, the apparatus 1100 determines or identifies at least one of: one or more prohibited sensing spaces 301 in which radio sensing is not allowed, one or more non-enhanced sensing spaces 303 in which the radio sensing is allowed, or one or more enhanced sensing spaces 302 in which to perform enhanced radio sensing compared to the radio sensing in the one or more non-enhanced sensing spaces 303. The one or more non-enhanced sensing spaces 303 may refer to one or more neutral or normal or default sensing spaces, where no special (enhanced) sensing is applied. It should be noted that the enhanced radio sensing is also not allowed in the one or more prohibited sensing spaces 301.

For example, the apparatus 1100 may receive, from at least one user equipment 100, 102, information indicating at least one of: the one or more prohibited sensing spaces 301, the one or more enhanced sensing spaces 302, or the one or more non-enhanced sensing spaces 303. In this case, the determination may be based on the information received from the at least one user equipment 100, 102.

For example, the information indicating the one or more prohibited sensing spaces 301 may comprise at least a location of the at least one user equipment 100, 102, and a diameter around the at least one user equipment 100, 102 within which the radio sensing is not allowed.

The enhanced radio sensing may comprise, for example, at least one of: an enhanced velocity resolution, an enhanced angular resolution, an enhanced range resolution, or an enhanced detection probability compared to the one or more non-enhanced sensing spaces 303 in which the radio sensing is allowed.

In block 602, the apparatus 1100 obtains or determines sensing configuration information (sensing rules) associated with at least one of: the one or more prohibited sensing spaces, or the one or more enhanced sensing spaces. For example, the sensing configuration information may be obtained from the database 411, or received from the at least one user equipment 100, 102. Alternatively, the apparatus 1100 may determine the sensing configuration information, for example such that transmission of a sensing radio signal into the one or more prohibited sensing spaces 301 is prevented, or such that reception of a reflected sensing radio signal from the one or more prohibited sensing spaces 301 is prevented.

In block 603, the apparatus 1100 controls, based on the sensing configuration information, at least one of: the radio sensing in the one or more prohibited sensing spaces 301, or the enhanced radio sensing in the one or more enhanced sensing spaces 302.

Some examples of the sensing configuration information are shown in Tables 1 and 2 above. For example, the sensing configuration information may comprise at least one of the following configuration parameters (or values of the configuration parameters) for one or more antennas (or for one or more antenna elements): a transmit power level associated with the one or more prohibited sensing spaces 301, a transmit power level associated with the one or more enhanced sensing spaces 302, a transmit power level associated with the one or more non-enhanced sensing spaces 303, an angle of arrival associated with the one or more prohibited sensing spaces 301, an angle of arrival associated with the one or more enhanced sensing spaces 302, an angle of arrival associated with the one or more non-enhanced sensing spaces 303, an angle of departure associated with the one or more prohibited sensing spaces 301, an angle of departure associated with the one or more enhanced sensing spaces 302, an angle of departure associated with the one or more non-enhanced sensing spaces 303, a beamwidth associated with the one or more prohibited sensing spaces 301, a beamwidth associated with the one or more enhanced sensing spaces 302, a beamwidth associated with the one or more non-enhanced sensing spaces 303, an angular range associated with the one or more prohibited sensing spaces 301, an angular range associated with the one or more enhanced sensing spaces 302, an angular range associated with the one or more non-enhanced sensing spaces 303, a carrier frequency associated with the one or more prohibited sensing spaces 301, a carrier frequency associated with the one or more enhanced sensing spaces 302, a carrier frequency associated with the one or more non-enhanced sensing spaces 303, a bandwidth associated with the one or more prohibited sensing spaces 301, a bandwidth associated with the one or more enhanced sensing spaces 302, a bandwidth associated with the one or more non-enhanced sensing spaces 303, a phase to be applied per antenna element of the one or more antennas in relation to the one or more prohibited sensing spaces 301, a phase to be applied per antenna element of the one or more antennas in relation to the one or more enhanced sensing spaces 302, a phase to be applied per antenna element of the one or more antennas in relation to the one or more non-enhanced sensing spaces 303, an amplitude to be applied per antenna element of the one or more antennas in relation to the one or more prohibited sensing spaces 301, an amplitude to be applied per antenna element of the one or more antennas in relation to the one or more enhanced sensing spaces 302, or an amplitude to be applied per antenna element of the one or more antennas in relation to the one or more non-enhanced sensing spaces 303.

The apparatus 1100 may create a spatial map 300 indicating the one or more prohibited sensing spaces 301, the one or more enhanced sensing spaces 302, and the one or more non-enhanced sensing spaces 303; and control, based on the spatial map and the sensing configuration information, the radio sensing in the one or more prohibited sensing spaces 301 (e.g., such that no radio sensing is performed in the one or more prohibited sensing spaces 301), the enhanced radio sensing in the one or more enhanced sensing spaces 302, and the radio sensing in the one or more non-enhanced sensing spaces.

For example, the controlling may comprise at least one of: controlling the radio head 202 to prevent transmission of one or more sensing radio signals from one or more antennas (or from one or more antenna elements) of the radio head 202 towards the one or more prohibited sensing spaces 301, or controlling the radio head to prevent reception of one or more reflected sensing radio signals by one or more antennas (or one or more antenna elements) of the radio head 202 from the one or more prohibited sensing spaces 301.

Alternatively, or additionally, the apparatus 1100 may obtain a configuration of the radio head 202 configured to perform the radio sensing; compare the configuration of the radio head and the sensing configuration information; determine, based on the comparison, whether the radio head is configured to perform the radio sensing in the one or more prohibited sensing spaces 301, wherein the controlling may comprise at least removing sensing information obtained by the radio head from the one or more prohibited sensing spaces 301, based on determining that the radio head is configured to perform the radio sensing in the one or more prohibited sensing spaces 301.

Alternatively, or additionally, the apparatus 1100 may create a periodogram by applying a fast Fourier transform operation or a discrete Fourier transform operation to a channel frequency response from the one or more prohibited sensing spaces 301, wherein the removing may comprise at least altering a response of the periodogram for a set of values associated with the one or more prohibited sensing spaces.

Alternatively, or additionally, the removing may comprise processing the channel frequency response with a low-pass smoothing filter for smoothing edges of the one or more prohibited sensing spaces; and performing an inverse fast Fourier transform operation or an inverse discrete Fourier transform operation to the channel frequency response after processing the channel frequency response with the low-pass smoothing filter.

Alternatively, or additionally, the sensing information may comprise at least a list of detected targets, the list comprising one or more targets detected in the one or more prohibited sensing spaces 301, wherein the removing may comprise at least removing, from the list of detected targets, the one or more targets detected in the one or more prohibited sensing spaces 301.

The apparatus 1100 may communicate with one or more wireless communication devices (e.g., one or more UEs 100, 102) in the one or more prohibited sensing spaces 301.

FIG. 7 illustrates a flow chart according to an example embodiment of a method for radio sensing control, wherein the sensing information from the one or more prohibited sensing spaces 301 is removed at the beamforming level. The method may be performed by an apparatus 1100 depicted in FIG. 11. The apparatus 1100 may refer to the sensing controller 201.

Referring to FIG. 7, in block 701, the apparatus 1100 determines at least one or more prohibited sensing spaces 301 in which radio sensing is not allowed.

For example, the apparatus 1100 may receive, from at least one user equipment 100, 102, information indicating at least the one or more prohibited sensing spaces 301. For example, the information indicating the one or more prohibited sensing spaces 301 may comprise at least a location of the at least one user equipment 100, 102, and a diameter around the at least one user equipment 100, 102 within which the radio sensing is not allowed.

In block 702, the apparatus 1100 may create a spatial map 300 indicating at least the one or more prohibited sensing spaces 301.

In block 703, the apparatus 1100 obtains sensing configuration information associated with the one or more prohibited sensing spaces 301. For example, the sensing configuration information may be obtained from the database 411. Some examples of the sensing configuration information are described above.

In block 704, the apparatus 1100 controls, based on the sensing configuration information and possibly based on the spatial map 300, at least the radio sensing in the one or more prohibited sensing spaces 301. In this case, the controlling may comprise at least one of: controlling the radio head 202 to prevent transmission of one or more sensing radio signals from one or more antennas (or from one or more antenna elements) of the radio head 202 towards the one or more prohibited sensing spaces 301, or controlling the radio head to prevent reception of one or more reflected sensing radio signals by one or more antennas (or one or more antenna elements) of the radio head 202 from the one or more prohibited sensing spaces 301.

For example, this may mean that the sniffer 440 (or any other sensing receiver) does not steer a beam into the angular direction of the one or more prohibited sensing spaces 301. The beamwidth from the beamforming codebook and single element antenna patterns may be taken into account such that any residual side-lobe signal is considerably (e.g., 40 dB) weaker than the main lobe level of the beam. For example, the apparatus 1100 may comprise, or be comprised in, the radio head 202 or antenna array, such that the radio head 202 or antenna array for processing the sensing signal (for Rx or optionally Tx direction) can carry out the removal of the sensing information at the beamforming level.

Alternatively, the sensing processing unit (SPU) 420 functionality for the actual OFDM radar processing may reside in the split-processing base station 104 as a co-located part of the RU 103, DU 105 or CU 108. In this case, the apparatus 1100 may comprise, or be comprised in, the RU 103, or the DU 105, or the CU 108, which may carry out the removal of the sensing information at the beamforming level (e.g., in case the SPU 420 is in control of the sensing receive array 440).

Alternatively, in case of sensing variants where UEs are involved as sensing receivers (e.g., DL bi-static base-station-to-UE sensing or mono-static UE-only sensing), the apparatus 1100 may comprise, or be comprised in, a UE 100, 102 that carries out the removal of the sensing information at the beamforming level.

In block 705, the apparatus 1100 may communicate with one or more wireless communication devices (e.g., one or more UEs 100, 102) in the one or more prohibited sensing spaces 301. For example, in the integrated sensing and communication system of FIG. 4, it may be desirable to limit as much as possible the impact of the sensing function on the communication function. In general, the sensing control should have no impact on the communication function, unless it is strictly necessary to enforce an extreme sensing control policy, for instance in case of national security emergencies, defense requirements, or a known cyber attack on the infrastructure.

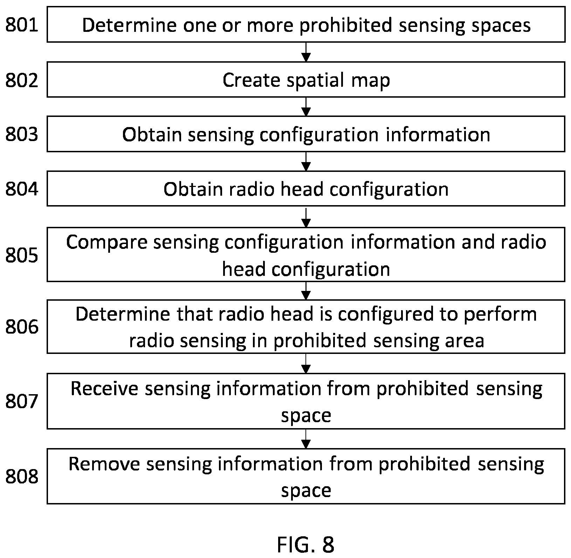

FIG. 8 illustrates a flow chart according to an example embodiment of a method for radio sensing control, wherein the sensing information from the one or more prohibited sensing spaces 301 is removed at the detected target level. The method may be performed by an apparatus 1100 depicted in FIG. 11. The apparatus 1100 may refer to the sensing controller 201.

Referring to FIG. 8, in block 801, the apparatus 1100 determines at least one or more prohibited sensing spaces 301 in which radio sensing is not allowed.

For example, the apparatus 1100 may receive, from at least one user equipment 100, 102, information indicating at least the one or more prohibited sensing spaces 301. For example, the information indicating the one or more prohibited sensing spaces 301 may comprise at least a location of the at least one user equipment 100, 102, and a diameter around the at least one user equipment 100, 102 within which the radio sensing is not allowed.

In block 802, the apparatus 1100 may create a spatial map 300 indicating at least the one or more prohibited sensing spaces 301.

In block 803, the apparatus 1100 obtains sensing configuration information associated with the one or more prohibited sensing spaces 301. For example, the sensing configuration information may be obtained from the database 411. Some examples of the sensing configuration information are described above.

In block 804, the apparatus 1100 obtains a configuration of a radio head 202 configured to perform the radio sensing.

In block 805, the apparatus 1100 compares the configuration of the radio head 202 and the sensing configuration information.

In block 806, the apparatus 1100 determines, based on the comparison, whether the radio head 202 is configured to perform the radio sensing in the one or more prohibited sensing spaces 301.

In block 807, the apparatus 1100 receives, from the radio head 202, sensing information obtained from the one or more prohibited sensing spaces 301.

In block 808, the apparatus 1100 controls, based on the sensing configuration information and possibly based on the spatial map 300, at least the radio sensing in the one or more prohibited sensing spaces 301. In this case, the controlling comprises at least removing the sensing information obtained by the radio head 202 from the one or more prohibited sensing spaces 301, based on determining that the radio head is configured to perform the radio sensing in the one or more prohibited sensing spaces.

For example, the sensing information may comprise at least a list of detected targets, the list comprising one or more targets detected in the one or more prohibited sensing spaces 301. The removing may comprise at least removing, from the list of detected targets, the one or more targets detected in the one or more prohibited sensing spaces 301. In other words, in case the system provides a list of detected targets (with optional additional information, e.g., on Doppler), all targets in the one or more prohibited sensing spaces 301 are removed from the list.

As an example, the apparatus 1100 may comprise, or be comprised in, a network exposure function (NEF) 112 of the core network 110. The NEF 112 provides a standardized interface for exposing capabilities and services of the 5G core network to external applications and services, allowing secure and controlled access to network functionalities and data. In this case, the removal of the sensing information at the detected target level may be performed at the NEF 112. For example, in the final step from the network to the application, the NEF 112 may remove the sensing information at the detected target level.

Alternatively, the apparatus 1100 may comprise, or be comprised in, a sensing management function (SeMF) 111 of the core network 110, which is responsible for aggregating sensing information over multiple base station and carries out high-level resource control and QoS management for sensing for these multiple base station. In this case, the SeMF 430 may carry out the removal of the sensing information at the detected target level.

Alternatively, the sensing processing unit (SPU) 420 functionality for the actual OFDM radar processing may reside in the split-processing base station 104 as a co-located part of the RU 103, DU 105 or CU 108. In this case, the apparatus 1100 may comprise, or be comprised in, the RU 103, or the DU 105, or the CU 108, which may carry out the removal of the sensing information at the detected target level.

Alternatively, in case of sensing variants where UEs are involved as sensing receivers (e.g., DL bi-static base-station-to-UE sensing or mono-static UE-only sensing), the apparatus 1100 may comprise, or be comprised in, a UE 100, 102 that carries out the removal of the sensing information at the detected target level.

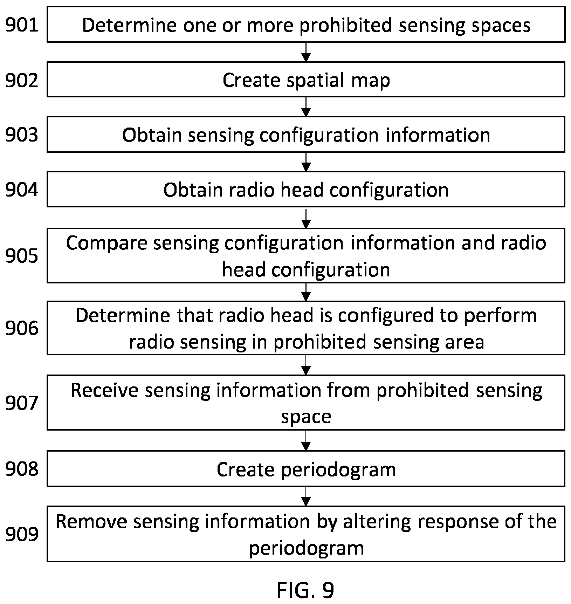

FIG. 9 illustrates a flow chart according to an example embodiment of a method for radio sensing control, wherein the sensing information from the one or more prohibited sensing spaces 301 is removed at the periodogram level. The method may be performed by an apparatus 1100 depicted in FIG. 11. The apparatus 1100 may refer to the sensing controller 201.

Referring to FIG. 9, in block 901, the apparatus 1100 determines at least one or more prohibited sensing spaces 301 in which radio sensing is not allowed.

For example, the apparatus 1100 may receive, from at least one user equipment 100, 102, information indicating at least the one or more prohibited sensing spaces 301. For example, the information indicating the one or more prohibited sensing spaces 301 may comprise at least a location of the at least one user equipment 100, 102, and a diameter around the at least one user equipment 100, 102 within which the radio sensing is not allowed.

In block 902, the apparatus 1100 may create a spatial map 300 indicating at least the one or more prohibited sensing spaces 301.

In block 903, the apparatus 1100 obtains sensing configuration information associated with the one or more prohibited sensing spaces 301. For example, the sensing configuration information may be obtained from the database 411. Some examples of the sensing configuration information are described above.

In block 904, the apparatus 1100 obtains a configuration of a radio head 202 configured to perform the radio sensing.

In block 905, the apparatus 1100 compares the configuration of the radio head 202 and the sensing configuration information.

In block 906, the apparatus 1100 determines, based on the comparison, whether the radio head 202 is configured to perform the radio sensing in the one or more prohibited sensing spaces 301.

In block 907, the apparatus 1100 receives, from the radio head 202, sensing information obtained from the one or more prohibited sensing spaces 301.

In block 908, the apparatus 1100 creates a periodogram by applying a fast Fourier transform operation or a discrete Fourier transform operation to a channel frequency response from the one or more prohibited sensing spaces 301.

In block 909, the apparatus 1100 controls, based on the sensing configuration information and possibly based on the spatial map 300, at least the radio sensing in the one or more prohibited sensing spaces 301. In this case, the controlling comprises at least removing the sensing information obtained by the radio head 202 from the one or more prohibited sensing spaces 301, based on determining that the radio head is configured to perform the radio sensing in the one or more prohibited sensing spaces. Herein the removing comprises at least altering a response of the periodogram for a set of values associated with the one or more prohibited sensing spaces 301.

A periodogram can be multidimensional. For a single observation in a three-dimensional space, the periodogram may consist of range, vertical and horizontal angle. The response of the periodogram for the values of the one or more prohibited sensing spaces 301 can be altered to remove the sensing information obtained from the one or more prohibited sensing spaces 301. One possibility is to set the periodogram to zero. Another possibility is to set the periodogram to the average level of non-target spaces.

For example, the apparatus 1100 may comprise, or be comprised in, a sensing management function (SeMF) 430 of the core network 110, which is responsible for aggregating sensing information over multiple base station and carries out high-level resource control and QoS management for sensing for these multiple base station. In this case, the SeMF 430 may carry out the removal of the sensing information at the periodogram level.

Alternatively, the sensing processing unit (SPU) 420 functionality for the actual OFDM radar processing may reside in the split-processing base station 104 as a co-located part of the RU 103, DU 105 or CU 108. In this case, the apparatus 1100 may comprise, or be comprised in, the RU 103, or the DU 105, or the CU 108, which may carry out the removal of the sensing information at the periodogram level.

Alternatively, in case of sensing variants where UEs are involved as sensing receivers (e.g., DL bi-static base-station-to-UE sensing or mono-static UE-only sensing), the apparatus 1100 may comprise, or be comprised in, a UE 100, 102 that carries out the removal of the sensing information at the periodogram level.

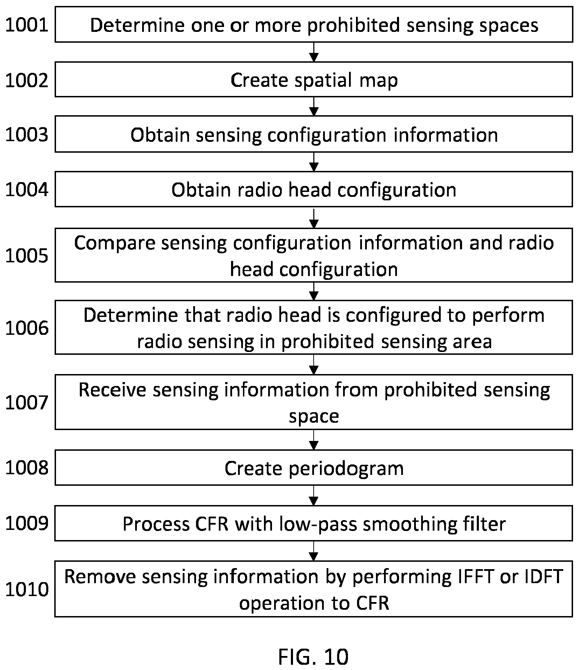

FIG. 10 illustrates a flow chart according to an example embodiment of a method for radio sensing control, wherein the sensing information from the one or more prohibited sensing spaces 301 is removed at the channel frequency response level. The method may be performed by an apparatus 1100 depicted in FIG. 11. The apparatus 1100 may refer to the sensing controller 201.

Referring to FIG. 10, in block 1001, the apparatus 1100 determines at least one or more prohibited sensing spaces 301 in which radio sensing is not allowed.

For example, the apparatus 1100 may receive, from at least one user equipment 100, 102, information indicating at least the one or more prohibited sensing spaces 301. For example, the information indicating the one or more prohibited sensing spaces 301 may comprise at least a location of the at least one user equipment 100, 102, and a diameter around the at least one user equipment 100, 102 within which the radio sensing is not allowed.

In block 1002, the apparatus 1100 may create a spatial map 300 indicating at least the one or more prohibited sensing spaces 301.

In block 1003, the apparatus 1100 obtains sensing configuration information associated with the one or more prohibited sensing spaces 301. For example, the sensing configuration information may be obtained from the database 411. Some examples of the sensing configuration information are described above.

In block 1004, the apparatus 1100 obtains a configuration of a radio head 202 configured to perform the radio sensing.

In block 1005, the apparatus 1100 compares the configuration of the radio head 202 and the sensing configuration information.

In block 1006, the apparatus 1100 determines, based on the comparison, whether the radio head 202 is configured to perform the radio sensing in the one or more prohibited sensing spaces 301.

In block 1007, the apparatus 1100 receives, from the radio head 202, sensing information obtained from the one or more prohibited sensing spaces 301.

In block 1008, the apparatus 1100 creates a periodogram by applying a fast Fourier transform operation or a discrete Fourier transform operation to a channel frequency response (CFR) from the one or more prohibited sensing spaces 301.

In block 1009, the apparatus 1100 processes the channel frequency response with a low-pass smoothing filter for smoothing edges of the one or more prohibited sensing spaces 301. The low-pass smoothing filter is a type of filter used in signal processing to allow low-frequency components of a signal to pass through while attenuating (reducing) the high-frequency components. This process effectively smooths the signal, reducing rapid fluctuations or noise, and highlighting longer-term trends or patterns. Low-pass smoothing filters can be used to clean up signals or data by removing unwanted noise or to extract meaningful information from a signal by emphasizing its lower frequency (slower changing) components.

In block 1010, the apparatus 1100 controls, based on the sensing configuration information and possibly based on the spatial map 300, at least the radio sensing in the one or more prohibited sensing spaces 301. In this case, the controlling comprises at least removing the sensing information obtained by the radio head 202 from the one or more prohibited sensing spaces 301, based on determining that the radio head is configured to perform the radio sensing in the one or more prohibited sensing spaces. Herein the removing comprises at least performing an inverse fast Fourier transform (IFFT) operation or an inverse discrete Fourier transform (IDFT) operation to the channel frequency response after processing the channel frequency response with the low-pass smoothing filter.

The removal of the sensing information at the channel frequency response level may be needed, when algorithms process the CFR directly, such as with artificial intelligence or machine learning techniques. First, the sensing information from the one or more prohibited sensing spaces 301 may be eliminated at the periodogram level (e.g., as described above at block 909). Then an additional smoothing step may be performed on the edges of the one or more prohibited spaces 301 to avoid discontinuities, based on the low-pass (three-dimensional) smoothing filter. After this step, the IFFT or IDFT operation is performed (i.e., the inverse of the fast Fourier transform operation or the discrete Fourier transform operation, which was used to create the periodogram from the CFR). As a result, the remaining "cleaned-up" CFR no longer contains any relevant information for the one or more prohibited sensing spaces 301.

For example, the sensing processing unit (SPU) 420 functionality for the actual OFDM radar processing may reside in the split-processing base station 104 as a co-located part of the RU 103, DU 105 or CU 108. In this case, the apparatus 1100 may comprise, or be comprised in, the RU 103, or the DU 105, or the CU 108, which may carry out the removal of the sensing information at the CFR level.

Alternatively, in case of sensing variants where UEs are involved as sensing receivers (e.g., DL bi-static base-station-to-UE sensing or mono-static UE-only sensing), the apparatus 1100 may comprise, or be comprised in, a UE 100, 102 that carries out the removal of the sensing information at the CFR level.

The blocks and related functions described above by means of FIG. 6 to FIG. 10 are in no absolute chronological order, and some of them may be performed simultaneously or in an order differing from the described one. Other functions can also be executed between them or within them, and/or other rules applied. Some of the blocks or part of the blocks can also be left out or replaced by a corresponding block or part of the block.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 11 illustrates an example of an apparatus 1100 comprising means for performing one or more of the example embodiments (e.g., the method of FIG. 6, 7, 8, 9 or 10) described above. The apparatus 1100 may refer to the sensing controller 201.

For example, the apparatus 1100 may be, or comprise, or be comprised, an application server, or a network function (e.g., the SeMF 111 or the NEF 112) of the core network 110, or a central unit 108 of a radio access network node (base station) 104, or a distributed unit 105 of the radio access network node (base station) 104, or a radio unit 103, 440 of the radio access network node (base station) 104, or a user equipment 100, 102, or a radio head 202, wherein at least a subset of antennas (or a subset of antenna elements) 203, 204, 205 of the radio head 202 are configured to enable radio sensing.

The apparatus 1100 may comprise, for example, a circuitry or a chipset applicable for realizing one or more of the example embodiments described above. The apparatus 1100 may be an electronic device or computing system comprising one or more electronic circuitries. The apparatus 1100 may comprise a sensing control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

In another embodiment, the means may be a network function of the core network 110, or the means may be network function virtualization infrastructure.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory.

The apparatus 1100 may further comprise or be connected to a communication interface 1130 comprising hardware and/or software for realizing communication connectivity according to one or more communication protocols. The communication interface 1130 may comprise at least one transmitter (Tx) and at least one receiver (Rx) that may be integrated to the apparatus 1100 or that the apparatus 1100 may be connected to. The communication interface 1130 may provide means for performing some of the blocks and/or functions (e.g., transmitting and receiving) for one or more example embodiments described above. The communication interface 1130 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1130 provides the apparatus with communication capabilities to communicate in the wireless communication network. The communication interface 1130 may, for example, provide a radio, cable or fiber interface to one or more base stations 104, radio units 103, distributed units 105, or central units 108 of a radio access network, and/or to one or more network functions 111, 112 of a core network 110. The communication interface 1130 may further provide a radio interface to one or more UEs 100, 102.

It is to be noted that the apparatus 1100 may further comprise various components not illustrated in FIG. 11. The various components may be hardware components and/or software components.

In another embodiment, the apparatus 1100 may comprise only the sensing control circuitry 1110. The sensing control circuitry 1110 may be configured to perform at least: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

In another embodiment, the apparatus 1100 may comprise at least two circuitries, such as a processing circuitry and the sensing control circuitry 1110. The processing circuitry may be configured to perform at least: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining sensing configuration information associated with at least one of: the one or more prohibited sensing spaces, or the one or more enhanced sensing spaces. The sensing control circuitry 1110 may be configured to perform at least: controlling, based on the sensing configuration information, at least one of: the radio sensing in the one or more prohibited sensing spaces, or the enhanced radio sensing in the one or more enhanced sensing spaces.

In another embodiment, the apparatus 1100 may comprise at least two circuitries, such as the sensing control circuitry 1110 and a memory circuitry 1120. The sensing control circuitry 1110 may be configured to perform at least: determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces; obtaining, from the memory circuitry 1120, sensing configuration information associated with at least one of: the one or more prohibited sensing spaces, or the one or more enhanced sensing spaces; and controlling, based on the sensing configuration information, at least one of: the radio sensing in the one or more prohibited sensing spaces, or the enhanced radio sensing in the one or more enhanced sensing spaces.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising:
means for determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces;
means for obtaining sensing configuration information associated with at least one of: the one or more prohibited sensing spaces, or the one or more enhanced sensing spaces; and
means for controlling, based on the sensing configuration information, at least one of: the radio sensing in the one or more prohibited sensing spaces, or the enhanced radio sensing in the one or more enhanced sensing spaces.

2. The apparatus of claim 1, wherein the sensing configuration information comprises at least one of the following configuration parameters for one or more antennas:
a transmit power level associated with the one or more prohibited sensing spaces,
a transmit power level associated with the one or more enhanced sensing spaces,
a transmit power level associated with the one or more non-enhanced sensing spaces,
an angle of arrival associated with the one or more prohibited sensing spaces,
an angle of arrival associated with the one or more enhanced sensing spaces,
an angle of arrival associated with the one or more non-enhanced sensing spaces,
an angle of departure associated with the one or more prohibited sensing spaces,
an angle of departure associated with the one or more enhanced sensing spaces,
an angle of departure associated with the one or more non-enhanced sensing spaces,
a beamwidth associated with the one or more prohibited sensing spaces,
a beamwidth associated with the one or more enhanced sensing spaces,
a beamwidth associated with the one or more non-enhanced sensing spaces,
an angular range associated with the one or more prohibited sensing spaces,
an angular range associated with the one or more enhanced sensing spaces,
an angular range associated with the one or more non-enhanced sensing spaces,
a carrier frequency associated with the one or more prohibited sensing spaces,
a carrier frequency associated with the one or more enhanced sensing spaces,
a carrier frequency associated with the one or more non-enhanced sensing spaces,
a bandwidth associated with the one or more prohibited sensing spaces,
a bandwidth associated with the one or more enhanced sensing spaces,
a bandwidth associated with the one or more non-enhanced sensing spaces,
a phase to be applied per antenna element of the one or more antennas in relation to the one or more prohibited sensing spaces,
a phase to be applied per antenna element of the one or more antennas in relation to the one or more enhanced sensing spaces,
a phase to be applied per antenna element of the one or more antennas in relation to the one or more non-enhanced sensing spaces,
an amplitude to be applied per antenna element of the one or more antennas in relation to the one or more prohibited sensing spaces,
an amplitude to be applied per antenna element of the one or more antennas in relation to the one or more enhanced sensing spaces, or
an amplitude to be applied per antenna element of the one or more antennas in relation to the one or more non-enhanced sensing spaces.

3. The apparatus of any preceding claim, wherein the controlling comprises at least one of:
controlling a radio head to prevent transmission of one or more sensing radio signals from one or more antennas of the radio head towards the one or more prohibited sensing spaces, or
controlling the radio head to prevent reception of one or more reflected sensing radio signals by one or more antennas of the radio head from the one or more prohibited sensing spaces.

4. The apparatus of any preceding claim, further comprising:
means for obtaining a configuration of a radio head configured to perform the radio sensing;
means for comparing the configuration of the radio head and the sensing configuration information; and
means for determining, based on the comparison, whether the radio head is configured to perform the radio sensing in the one or more prohibited sensing spaces,
wherein the controlling comprises at least removing sensing information obtained by the radio head from the one or more prohibited sensing spaces, based on determining that the radio head is configured to perform the radio sensing in the one or more prohibited sensing spaces.

5. The apparatus of claim 4, further comprising:
means for creating a periodogram by applying a fast Fourier transform operation or a discrete Fourier transform operation to a channel frequency response from the one or more prohibited sensing spaces;
wherein the removing comprises at least altering a response of the periodogram for a set of values associated with the one or more prohibited sensing spaces.

6. The apparatus of claim 5, wherein the removing further comprises:
processing the channel frequency response with a low-pass smoothing filter for smoothing edges of the one or more prohibited sensing spaces; and
performing an inverse fast Fourier transform operation or an inverse discrete Fourier transform operation to the channel frequency response after processing the channel frequency response with the low-pass smoothing filter.

7. The apparatus of any of claims 4 to 6, wherein the sensing information comprises at least a list of detected targets, the list comprising one or more targets detected in the one or more prohibited sensing spaces,
wherein the removing comprises at least removing, from the list of detected targets, the one or more targets detected in the one or more prohibited sensing spaces.

8. The apparatus of any preceding claim, wherein the enhanced radio sensing comprises at least one of: an enhanced velocity resolution, an enhanced angular resolution, an enhanced range resolution, or an enhanced detection probability compared to the one or more non-enhanced sensing spaces in which the radio sensing is allowed.

9. The apparatus of any preceding claim, further comprising:
means for creating a spatial map indicating the one or more prohibited sensing spaces, the one or more enhanced sensing spaces, and the one or more non-enhanced sensing spaces; and
means for controlling, based on the spatial map and the sensing configuration information, the radio sensing in the one or more prohibited sensing spaces, the enhanced radio sensing in the one or more enhanced sensing spaces, and the radio sensing in the one or more non-enhanced sensing spaces.

10. The apparatus of any preceding claim, further comprising:
means for receiving, from at least one user equipment, information indicating at least one of: the one or more prohibited sensing spaces, the one or more enhanced sensing spaces, or the one or more non-enhanced sensing spaces.

11. The apparatus of claim 10, wherein the information indicating the one or more prohibited sensing spaces comprises at least a location of the at least one user equipment, and a diameter around the at least one user equipment within which the radio sensing is not allowed.

12. The apparatus of any preceding claim, further comprising:
means for communicating with one or more wireless communication devices in the one or more prohibited sensing spaces.

13. The apparatus of any of claims 1 to 12, wherein the apparatus comprises, or is comprised in, a user equipment, or a central unit of a radio access network node, or a distributed unit of the radio access network node, or a radio unit of the radio access network node, a radio head, wherein at least a subset of antennas of the radio head are configured to enable the radio sensing.

14. A method comprising:
determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces;
obtaining sensing configuration information associated with at least one of: the one or more prohibited sensing spaces, or the one or more enhanced sensing spaces; and
controlling, based on the sensing configuration information, at least one of: the radio sensing in the one or more prohibited sensing spaces, or the enhanced radio sensing in the one or more enhanced sensing spaces.

15. A non-transitory computer readable medium comprising program instructions which, when executed by an apparatus, cause the apparatus to perform at least the following:
determining at least one of: one or more prohibited sensing spaces in which radio sensing is not allowed, one or more non-enhanced sensing spaces in which the radio sensing is allowed, or one or more enhanced sensing spaces in which to perform enhanced radio sensing compared to the radio sensing in the one or more non-enhanced sensing spaces;
obtaining sensing configuration information associated with at least one of: the one or more prohibited sensing spaces, or the one or more enhanced sensing spaces; and
controlling, based on the sensing configuration information, at least one of: the radio sensing in the one or more prohibited sensing spaces, or the enhanced radio sensing in the one or more enhanced sensing spaces.
